# FASCICULE DE BREVET EUROPEEN

(11) **EP 1 996 435 B1**
(45) Date de publication et mention de la délivrance du brevet: **19.10.2011**
(21) Numéro de dépôt: 06819786.2
(22) Date de dépôt: 27.11.2006
(51) Int. Cl.: B60S 1/40, B60S 1/38

(54) **SUPPORT DE MONTAGE D'UN BALAI D'ESSUIE-GLACE SUR UN BRAS D'ENTRAINEMENT REALISE EN TOLE PLIEE**
TRÄGER ZUR MONTAGE EINES SCHEIBENWISCHERBLATTS AN EINEM ANTRIEBSARM AUS GEBOGENEM BLECH
SUPPORT FOR MOUNTING A WINDSCREEN WIPER BLADE ON A DRIVE ARM MADE OF BENT SHEET

(30) Priorité: 30.11.2005 FR 0512147
(43) Date de publication de la demande: 03.12.2008
(73) Titulaire: Valeo Systèmes d'Essuyage, 78321 La Verrière (FR)
(72) Inventeur: LAURENS, Romain, F-63000 Clermont Ferrand (FR); BAUD, Frédéric, F-63980 Echandelys (FR)
(74) Mandataire: Rosolen-Delarue, Katell
(86) Numéro de dépôt international: PCT/EP2006/068959
(87) Numéro de publication internationale: WO 2007/063051

(56) Documents cités:
- EP-A- 1 484 224
- DE-A1- 19 641 042
- GB-A- 678 149

## Description

L'invention propose un support de montage d'un balai d'essuie-glace sur lequel est monté un connecteur de montage et d'articulation du balai par rapport à un bras d'entraînement, qui est réalisé d'une seule pièce en tôle pliée.

L'invention propose plus particulièrement un support de montage d'un balai d'essuie-glace d'orientation principale longitudinale sur un bras d'entraînement du balai, qui est apte à être fixé sur le balai, et sur lequel le bras d'entraînement est apte à être monté articulé par l'intermédiaire d'un connecteur de montage et d'articulation, le support de montage étant réalisé d'une seule pièce par découpe et pliage d'une plaque métallique et comportant au moins deux griffes latérales inférieures en vis-à-vis qui sont agencées transversalement de part et d'autre du support et dont chacune est apte à coopérer avec une partie e associée d'une vertèbre du balai pour la fixation du support sur le balai, et une partie supérieure sur laquelle le connecteur est apte à être monté articulé autour d'un axe A transversal d'articulation.

Le document EP 1 484 224 décrit un support de montage de balai d'essuie-glace sur un bras d'entraînement.

Le document WO-A-98/15438 décrit un tel support de montage réalisé d'une seule pièce en tôle pliée, qui comporte des pattes latérales inférieures qui sont aptes à être repliées dessous une vertèbre de rigidification du balai, pour former des griffes de solidarisation du support de montage au balai.

Selon ce document, le pliage des griffes est effectué lors de l'opération de montage du support sur le balai.

Cependant, les pattes inférieures sont de dimensions réduites, et l'espace disponible pour permettre le pliage des pattes inférieures est lui aussi réduit, notamment au dessous des vertèbres.

Par conséquent, le montage d'un tel support un balai d'essuie-glace fait appel à une installation de structure particulièrement complexe, ce qui augmente le coût global d'un tel balai d'essuie-glace.

De plus, les efforts mis en jeu lors du pliage des pattes inférieures, sont particulièrement élevés, ce qui risque d'endommager au moins partiellement le balai d'essuie-glace.

L'invention a pour but de proposer un support de montage dont l'assemblage sur le balai d'essuie-glace ne comporte pas d'étape de pliage par déformation plastique d'une partie du support de montage.

Dans ce but, l'invention propose un support de montage du type décrit précédemment, dans lequel la partie supérieure comporte au moins une portion déformable élastiquement qui est apte à se déformer lors du montage et de la fixation du support de montage sur le balai pour permettre un mouvement globalement transversal des griffes latérales l'une par rapport à l'autre entre une position rapprochées de fixation du support, dans laquelle chaque griffe latérale coopère avec la partie e de la vertèbre associée, et au moins une position écartées dans laquelle au moins une griffe ne coopère pas avec la partie e de la vertèbre associée, pour permettre le montage du support sur le balai,
- la partie supérieure comportant deux ailes latérales longitudinales verticales dont l'extrémité inférieure i de chaque aile est reliée à une griffe latérale, et les extrémités supérieures des deux ailes sont reliées à la dite au moins une portion déformable élastiquement. Conformément à l'invention :
- la partie supérieure comporte une portion intermédiaire agencée transversalement entre les deux ailes latérales, chaque aile latérale étant reliée à la portion intermédiaire par l'intermédiaire d'une portion déformable élastiquement associée, et
- la portion intermédiaire comporte un fond horizontal d'orientation principale longitudinale, qui est apte à s'appuyer sur une face supérieure du balai, et deux ailes intermédiaires dont chacune s'étend verticalement vers le haut depuis un bord longitudinal a d'extrémité transversale du fond, et le bord longitudinal supérieur de chaque aile intermédiaire est relié au bord longitudinal supérieur d'une aile latérale associée par l'intermédiaire de la portion déformable élastiquement associée. Selon d'autres caractéristiques de l'invention :
- chaque aile latérale et l'aile intermédiaire associée, sont accolées transversalement l'une contre l'autre au niveau de leurs faces longitudinales verticales a, a en vis-à-vis, en formant un muret vertical, lorsque les griffes latérales sont en position rapprochées de fixation, et en ce que lorsque les griffes latérales sont dans une position écartées, ladite aile latérale et la dite aile intermédiaire associée sont écartées transversalement l'une de l'autre ;
- les deux ailes latérales sont accolées transversalement l'une contre l'autre au niveau de leurs faces longitudinales verticales a en vis-à-vis, formant un muret vertical, lorsque les griffes latérales sont en position rapprochées de fixation, et en ce que lorsque les griffes latérales sont dans une position écartées, les ailes latérales sont écartées transversalement l'une de l'autre ;
- chaque muret comporte des moyens, de blocage des ailes, en position accolées l'une contre l'autre ;
- les moyens de blocage comportent un doigt qui est solidaire d'une aile, et qui est reçu dans un logement complémentaire de l'aile, associée ;
- chaque muret est apte à être reçu sans jeu transversal dans un logement complémentaire du connecteur, d'orientation principale longitudinale verticale lorsque le connecteur est monté sur le support d'articulation ;
- chaque aile du support comporte un orifice coaxial à l'axe A transversal d'articulation, qui est apte à recevoir une langue transversale interne associée qui fait saillie par rapport à une face longitudinale verticale interne du logement associé, pour réaliser le montage et l'articulation autour de l'axe transversal du connecteur sur le support.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un support de montage conforme à l'invention qui est fixé sur un balai d'essuie-glace du type "flat-blade" et sur lequel est apte à être monté un connecteur solidaire d'un bras d'entraînement ;
- la figure 2 est une vue en section suivant un plan vertical transversal du support de montage et du connecteur représentés à la figure 1, avant la fixation du support sur le balai d'essuie-glace, et avant le montage du connecteur d'articulation sur le support ;
- la figure 3 est une vue en section similaire à celle de la figure 2, dans laquelle le support est en position fixée sur le balai d'essuie-glace, et dans laquelle le connecteur est en position montée sur le support de montage ;
- les figures 4 et 5 sont des vues en bout du support de montage selon une variante de réalisation de l'invention dans laquelle le support de montage comporte des doigts de verrouillage.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

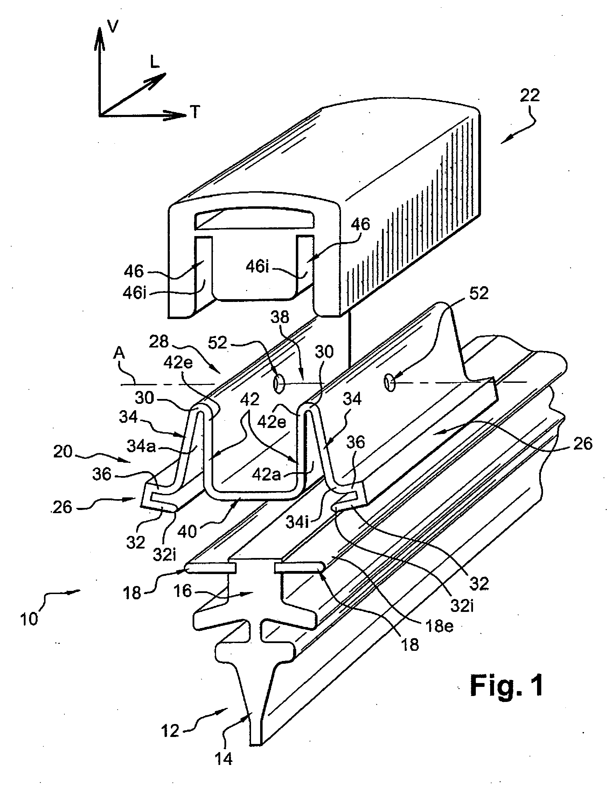

On a représenté à la figure 1, un balai d'essuie-glace 10 du type "flat-blade", qui comporte une raclette 12 s'étendant longitudinalement, qui est constituée dans sa partie inférieure d'une lame 14 destinée à frotter contre la vitre à essuyer, et dans sa partie supérieure, d'un talon de fixation 16.

Le balai d'essuie-glace 10 comporte aussi des vertèbres de rigidification 18 dont chacune est reçue dans rainure complémentaire réalisée dans un bord latéral du talon 16.

Les vertèbres 18 sont conçues de manière à assurer une rigidité au balai d'essuie-glace 10, permettant ainsi de répartir l'effort d'appui de la raclette 12 contre la vitre à essuyer sur toute sa longueur.

Un support de montage 20 est monté sur le balai 10, et il est agencé longitudinalement globalement au milieu du balai 10, en chevauchant le talon 16 et les vertèbres 18 du balai 10.

Le support de montage 20 est en outre apte à recevoir un connecteur 22 de montage et d'articulation, autour d'un axe A transversal, d'un bras 24 d'entraînement du balai 10 dans un mouvement de balayage alterné sur la vitre à essuyer.

Le support de montage 20 consiste en une plaque de tôle qui a été découpée et pliée de manière que le support de montage 20 consiste en un élément d'orientation principale longitudinale comportant dans sa partie inférieure des griffes latérales 26 qui sont agencées transversalement de part et d'autre du balai 10.

Ici, le support de montage 20 comporte deux griffes latérales 26 en vis-à-vis l'une de l'autre, dont chacune s'étend longitudinalement globalement sur toute la longueur du support de montage 20.

Cependant, il sera compris que l'invention n'est pas limitée à ce mode de réalisation, et que le support de montage 20 peut comporter un plus grand nombre de griffes latérales 26 qui sont agencées de chaque coté du support 20, la longueur de chaque griffe 26 est alors inférieure à la longueur du support 20.

Chaque griffe 26 est apte à coopérer avec une vertèbre 18 du balai pour la fixation du support 20 sur le balai 10. Pour cela, chaque griffe 26 délimite un logement longitudinal ouvert transversalement en direction de l'autre griffe 26, et dans lequel une portion transversale externe 18e d'une vertèbre 18 associée est reçue.

Le support de montage 20 comporte aussi une partie supérieure 28 qui s'étend au-dessus du talon supérieur 16 du balai 10 et sur laquelle le connecteur 22 est monté articulé autour de l'axe A transversal d'articulation.

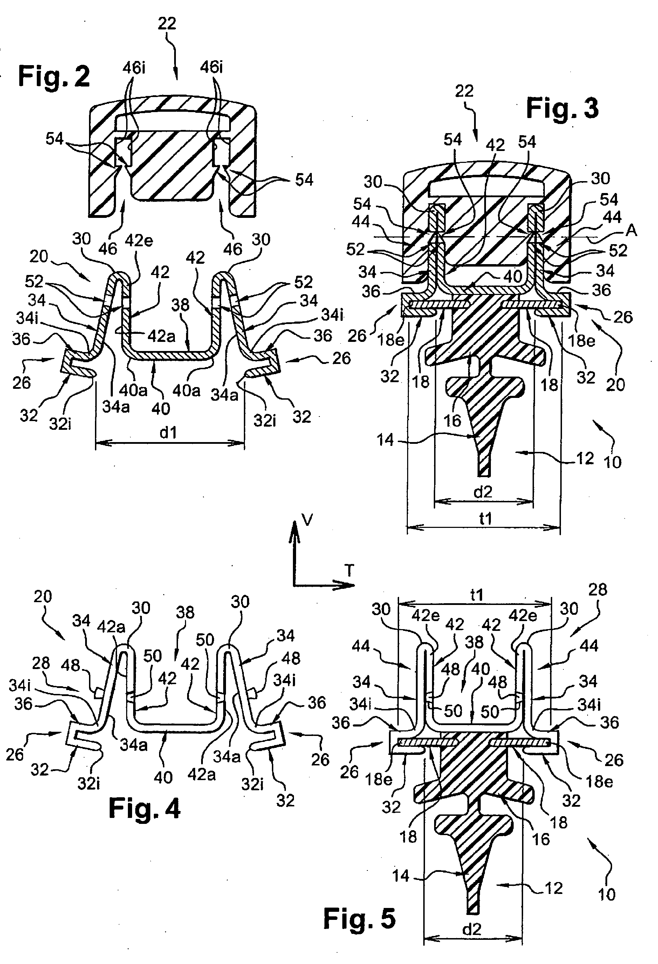

Conformément à l'invention, la partie supérieure 28 du support de montage 20 comporte au moins une portion 30 qui est déformable élastiquement, pour permettre, lors de la fixation du support de montage 20 sur le balai d'essuie-glace 10, un déplacement transversalement des griffes latérales l'une par rapport à l'autre, depuis une position écartées représentée aux figures 1 et 2, vers uns position resserrées de fixation, représentée à la figure 3.

Comme on peut le voir plus en détails à la figure 2, lorsque les griffes 26 sont en position écartées, la distance transversale "d1" entre les bords longitudinaux d'extrémité transversale interne libre 32i des branches inférieures 32 des griffes inférieures 26, est globalement égale à la distance transversale "t1" (figure 3) entre les bords longitudinaux des parties externes 18e des deux vertèbres 18.

L'espace entre les bords libres 32i des branches inférieures 32 permet ainsi de positionner le support de montage 20 sur le balai 10, de manière que la partie externe 18e de chaque vertèbre 18 est située transversalement en vis-à-vis du logement longitudinal délimité par la griffe 26 associée.

Comme on peut le voir à la figure 3, lorsque les griffes 26 sont en position rapprochées de fixation, la distance "d2" entre les bords longitudinaux 32i d'extrémité libre des branches inférieures 32 de deux griffes latérales 26 en vis-à-vis, est inférieure à la distance "d1" décrite précédemment.

Dans cette position transversale des griffes 26 l'une par rapport à l'autre, chaque vertèbre 18 est reçue sans jeu transversal dans le logement délimité par la griffe latérale 26 associée.

Pour permettre le déplacement relatif des griffes latérales 26 selon un mouvement globalement transversal, la partie supérieure 28 du support de montage 20 comporte deux ailes longitudinales verticales 34, dont le bord longitudinal d'extrémité inférieure 34i de chaque aile latérale 34 est relié à la branche supérieure 36 de chaque griffe 26 qui est agencée transversalement d'un même côté du balai 10.

Ici, la partie supérieure 28 du support de montage 20 comporte une portion intermédiaire 38 d'orientation principale d'orientation principale longitudinale et dont la section suivant un plan vertical transversal est en forme de "U". Cette portion intermédiaire 38 est agencée transversalement entre les deux ailes latérales 34.

La portion intermédiaire 38 comporte un fond inférieur horizontal 40 qui est apte à s'appuyer sur une face supérieure du talon 16 de la raclette 12, et deux ailes intermédiaires 42 dont chacune s'étend verticalement vers le haut depuis un bord longitudinal d'extrémité transversale 40a du fond 40.

Conformément à l'invention, le bord longitudinal d'extrémité supérieure 42e de chaque aile latérale 42 est relié au bord longitudinal d'extrémité supérieure de l'aile intermédiaire 42 associée par l'intermédiaire d'une portion 30 déformable élastiquement.

Par conséquent, chaque aile latérale 34 est reliée à la portion intermédiaire 38 par l'intermédiaire d'une portion 30 déformable élastiquement associée.

Comme on peut le voir à la figure 2, lorsque les griffes latérales 26 sont en position écartées, pour permettre le montage du support de montage 20 sur le balai 10, chaque aile latérale 34 est située transversalement à distance de l'aile intermédiaire 42 associée, c'est-à-dire que leurs faces longitudinales verticales 34a, 42a en vis-à-vis sont distantes l'une de l'autre.

Par contre, comme on l'a représenté à la figure 3, lorsque les griffes latérales 26 sont en position rapprochées de montage, chaque aile latérale 34 et l'aile intermédiaire 42 associée sont accolées transversalement l'une contre l'autre au niveau de leurs faces longitudinales verticales en vis-à-vis 34a, 42a, en formant un muret 44 d'orientation principale longitudinale verticale qui s'étend vers le haut depuis le fond 40 de la portion intermédiaire 38.

Conformément à un autre aspect de l'invention, chaque muret 44 du support 20 ainsi formé par une aile latérale 32 et par l'aile intermédiaire 42 associée, est apte à être reçu dans un logement 46 longitudinal vertical du connecteur 22 qui est débouchant verticalement vers le bas au niveau d'une face inférieure du connecteur 22.

Chaque logement 46 du connecteur 22 est de dimensions globalement complémentaires de celles du muret 44 associé, de manière que chaque muret vertical 44 est reçu sans jeu transversal dans le logement 44 associé, lorsque le connecteur 22 est en position montée sur le support de montage 22.

Ainsi, lorsque le connecteur 22 est en position montée sur le support 20, chaque aile latérale 34 du support de montage ne peut pas s'écarter transversalement de l'aile intermédiaire 42 associée.

Par conséquent, les griffes latérales 26 du support de montage 20 ne peuvent pas non plus se déplacer transversalement depuis leurs positions rapprochées de montage représentées à la figure 3, vers leur position écartées représentée à la figure 2. Une désolidarisation accidentelle du support de montage 20 d'avec le balai 10 ne peut donc pas avoir lieu.

Le connecteur 22 réalise par conséquent une fonction de verrouillage du support de montage 20 en position sur le balai 10.

Selon un mode de réalisation préféré, avant son montage sur le balai 10, le support de montage 20 se présente naturellement sous la forme représentée à la figure 2, c'est-à-dire que les griffes latérales 26 sont en position écartées transversalement, les portions déformables élastiquement 30 réalisent donc un rappel élastique des griffes 26 en position écartée.

De plus, lorsque les griffes latérales 26 sont en position rapprochées de montage du support de montage 20 sur le balai, les portions déformables élastiquement 30 exercent toujours ce même effort de rappel tendant à écarter transversalement les griffes latérales 26.

On a représenté aux figures 4 et 5 une variante de réalisation du support de montage 20 selon l'invention selon laquelle la partie supérieure 28 du support de montage 20 comporte des moyens de blocage des ailes latérales 34 en position accolée contre les ailes intermédiaires 42 de la portion intermédiaire 38.

Ici, les moyens de blocage comportent un doigt 48 d'orientation principale transversale qui est solidaire de chaque aile latérale 34, et qui est apte à être reçu dans un logement complémentaire 50 réalisé dans l'aile intermédiaire 42 associée à l'aile latérale 34.

De plus, la forme de chaque doigt 48 et du logement 50 associé est déterminée de manière a empêcher tout coulissement du doigt 48 dans le logement associée 50 selon la direction transversale.

Selon un autre aspect des doigts 48, ceux-ci sont réalisés de manière qu'ils s'étendent au niveau de la face longitudinale verticale externe 34e de l'aile latérale associée, et chaque doigt 48 est apte à être déformé plastiquement pour son introduction dans le logement 50 associé.

Selon le mode de réalisation de l'invention représenté aux figures, la partie supérieure 28 du support 20 comporte deux murets 44- répartis globalement symétriquement par rapport à un plan longitudinal vertical médian du support de montage 20.

Cependant, il sera compris que l'invention n'est pas limitée à ce mode de réalisation du support de montage 20.

Par exemple, selon un autre mode de réalisation de l'invention, la partie supérieure 28 du support de montage 20 ne comporte qu'un seul muret 44 qui est alors formé par les deux seules ailes latérales 34.

Par conséquent, les deux ailes latérales 34 sont accolées transversalement l'une contre l'autre, au niveau de la face longitudinale verticale en vis-à-vis 34a, lorsque les griffes latérales 26 sont en position rapprochées de montage, et lorsque les griffes latérales 26 sont en position écartée, les faces longitudinales verticales en vis-à-vis des deux ailes latérales 34 sont distantes l'une de l'autre.

Le connecteur 22 comporte alors un seul logement 46 qui est associé à ce muret 44 unique de la partie supérieure 28.

Enfin, lorsque la partie supérieure 28 comporte des moyeux de blocage des ailes latérales 34 en position accolée transversalement l'une contre l'autre, une première aile latérale 34 porte le doigt 48 et l'autre aile latérale 34 porte le logement 50 associé.

Comme on l'a dit plus haut, le connecteur est apte à être monté articulé sur le support 20 autour de l'axe A transversal.

Le support de montage 20 comporte à cet effet un orifice circulaire 52 d'articulation coaxial à l'axe A transversal, qui est réalisé dans chaque aile latérale 34 et dans chaque aile intermédiaire 42.

Selon un mode de réalisation préféré de l'invention, et comme représenté aux figures 2 et 3, le connecteur 22 comporte une langue interne 54 qui fait saillie transversalement par rapport à chaque face longitudinale verticale interne 46i de chaque logement 46, et qui est apte à être reçue dans un orifice associé 52 d'une aile latérale 34 ou d'une aile intermédiaire 42.

Chaque langue 54 est de forme globalement circulaire complémentaire à celle de l'orifice 52 associé et coaxiale à l'axe A transversal, de manière que les langues 54 permettent de réaliser l'articulation du connecteur 22 par rapport au support 20 autour de l'axe A, et de manière qu'elle permettent de réaliser le blocage longitudinalement et transversalement du connecteur 22 en position montée sur le support 20.

## Revendications

1. Support (20) de montage d'un balai (10) d'essuie-glace d'orientation principale longitudinale sur un bras d'entraînement du balai (10), qui est apte à être fixé sur le balai (10), et sur lequel le bras d'entraînement est apte à être monté articulé par l'intermédiaire d'un connecteur (22) de montage et d'articulation,
le support (20) de montage étant réalisé d'une seule pièce par découpe et pliage d'une plaque métallique et comportant au moins deux griffes (26) latérales inférieures en vis-à-vis qui sont agencées transversalement de part et d'autre du support (20) et dont chacune est apte à coopérer avec une partie (18e) associée d'une vertèbre (18) du balai (10) pour la fixation du support (20) sur le balai (10), et une partie supérieure (28) sur laquelle le connecteur (22) est apte à être monté articulé autour d'un axe A transversal d'articulation,
la partie supérieure (28) comportant au moins une portion (30) déformable élastiquement qui est apte à se déformer lors du montage et de la fixation du support (20) de montage sur le balai (10) pour permettre un mouvement globalement transversal des griffes (26) latérales l'une par rapport à l'autre entre au moins une position écartées dans laquelle au moins une griffe (26) ne coopère pas avec la partie (18e) de la vertèbre (18) associée, pour permettre le montage du support (20) sur le balai (10), et une position rapprochées de fixation du support (20), dans laquelle chaque griffe (26) latérale coopère avec la partie (18e) de la vertèbre (18) associée,
la partie supérieure (28) comportant deux ailes latérales (34) longitudinales verticales dont l'extrémité inférieure (34i) de chaque aile (34) est reliée à une griffe (26) latérale, et les extrémités supérieures des deux ailes (34) sont reliées à la dite au moins une portion déformable élastiquement (30).
**caractérisé en ce que** la partie supérieure (28) comporte une portion intermédiaire (38) agencée transversalement entre les deux ailes latérales (34), chaque aile latérale (34) étant reliée à la portion intermédiaire (38) par l'intermédiaire d'une portion déformable élastiquement (30) associée,
**en ce que** la portion intermédiaire (38) comporte un fond (40) horizontal d'orientation principale longitudinale, qui est apte à s'appuyer sur une face supérieure du balai (10), et deux ailes intermédiaires (42) dont chacune s'étend verticalement vers le haut depuis un bord longitudinal (40a) d'extrémité transversale du fond (40),
et **en ce que** le bord longitudinal supérieur de chaque aile intermédiaire (42) est relié au bord longitudinal supérieur d'une aile latérale (34) associée par l'intermédiaire de la portion déformable élastiquement (30) associée.

2. Support (20) selon la revendication précédente, **caractérisé en ce que** chaque aile latérale (34) et l'aile intermédiaire (42) associée, sont accolées transversalement l'une contre l'autre au niveau de leurs faces longitudinales verticales (34a, 42a) en vis-à-vis, en formant un muret (44) vertical, lorsque les griffes (26) latérales sont en position rapprochées de fixation, et **en ce que** lorsque les griffes (26) latérales sont dans une position écartées, ladite aile latérale (34) et la dite aile intermédiaire (42) associée sont écartées transversalement l'une de l'autre.

3. Support (20) selon la revendication 1 ou 2, **caractérisé en ce que** les deux ailes latérales (34) sont accolées transversalement l'une contre l'autre au niveau de leurs faces longitudinales verticales (34a) en vis-à-vis, formant un muret vertical (44), lorsque les griffes (26) latérales sont en position rapprochées de fixation, et **en ce que** lorsque les griffes (26) latérales sont dans une position écartées, les ailes latérales (34) sont écartées transversalement l'une de l'autre.

4. Support (20) selon la revendication 2 ou 3, **caractérisé en ce que** chaque muret (44) comporte des moyens (48, 50) de blocage des ailes (34, 42) en position accolées l'une contre l'autre.

5. Support (20) selon la revendication précédente, **caractérisé en ce que** les moyens de blocage comportent un doigt (48) qui est solidaire d'une aile (34, 42) et qui est reçu dans un logement complémentaire (50) de l'aile (34, 42) associée.

6. Support (20) selon l'une des revendications 2 à 5, **caractérisé en ce que** chaque muret (44) est apte à être reçu sans jeu transversal dans un logement (46) complémentaire du connecteur (22), d'orientation principale longitudinale verticale lorsque le connecteur (22) est monté sur le support (20) d'articulation.

7. Support (20) selon la revendication précédente, **caractérisé en ce que** chaque aile (34, 42) du support (20) comporte un orifice (52) coaxial à l'axe A transversal d'articulation, qui est apte à recevoir une langue transversale interne (54) associée qui fait saillie par rapport à une face longitudinale verticale interne (46i) du logement (46) associé, pour réaliser le montage et l'articulation autour de l'axe A transversal du connecteur (22) sur le support (20).

8. Balai d'essuie-glace (10), **caractérisé en ce qu'**il comporte un support (20) de montage selon l'une quelconque des revendications précédentes.

## Claims

1. A support (20) for mounting a windscreen wiper blade (10) directed mainly longitudinally on an arm that drives the blade (10), which is able to be attached on the blade (10) and whereon the driving arm is able to be jointedly mounted by means of a joint-mounting connector (22),
the support (20) for mounting being made as a single piece by cutting and bending a metal sheet and comprising at least two opposite lower lateral claws (26), which are arranged transversally on either side of the support (20) and each of which is able to cooperate with an associated part (18e) of a backbone (18) of the blade (10), for attaching the support on the blade, and an upper part (28) whereon the connector (22) can be jointedly mounted about a transversal joint axis A,
the upper part (28) comprising at least one elastically deformable portion (30) which is able to deform when the mounting support (20) is mounted and attached to the blade (10), in order to allow a globally transverse movement of the lateral claws (26), with respect to each other, between at least a position apart wherein at least one claw (26) does not cooperate with the associated part (18e) of the backbone (18), in order to allow the mounting of the support (20) on the blade (10) and a close position for attaching the support wherein each lateral claw (26) cooperates with the part (18e) of the associated backbone (18).

2. A support (20) according to the preceding claim, **characterised in that** each lateral wing (34) and the associated intermediate wing (42) are transversely joined one against the other at the level of their opposite vertical longitudinal faces (34a, 42a), while forming a vertical ridge (44) when the lateral claws (26) are in the attaching close position and **in that**, when the lateral claws (26) are in a position apart, said lateral wing (34) and said associated intermediate wing (42) are transversely parted with respect to each other.

3. A support (20) according to claim 1 or 2, **characterised in that** both lateral wings (34) are transversally joined one against the other at the level of their vertical opposite vertical longitudinal faces (34a), forming a vertical ridge (44) when the lateral claws (26) are in an attaching close position and **in that**, when the lateral claws are in a position apart, the lateral wings (34) are transversally parted from each other.

4. A support (20) according to claim 2 or 3, **characterised in that** each ridge (44) includes means (48, 50) for blocking said wings (34, 42) in a position where they are joined one against the other.

5. A support (20) according to the preceding claim, **characterised in that** the blocking means include a finger (48) which is integral with a wing (34, 42) and which is received in a matching recess (50) of the associated wing (34, 42).

6. A support (20) according to one of claims 2 to 5, **characterised in that** each ridge (44) is able to be received without any transversal clearance in a matching recess (46) of the connector (22) having a vertical longitudinal main direction when the connector (22) is mounted on the joint support (20).

7. A support (20) according to the preceding claim, **characterised in that** each wing (34, 42) of the support (20) includes an orifice (52) coaxial to the joint transversal axis A, which is able to receive an associated internal transversal tab (54) which protrudes with respect to an internal vertical longitudinal face (46i) of the associated recess (46), to carry out the mounting and joint about the transversal axis A of the connector (22) on the support (20) .

8. A windscreen wiper blade (10), **characterised in that** it includes a support for mounting (20) according to any one of the preceding claims.

## Patentansprüche

1. Träger (20) zur Montage eines Wischerblattes (10) mit länglicher Hauptausrichtung auf einem Antriebsarm des Wischerblattes (10), der geeignet ist, auf dem Wischerblatt (10) befestigt zu werden und auf dem der Antriebsarm geeignet ist, artikuliert über ein Montage- und Artikulationsverbindungsstück (22) montiert zu werden,
wobei der Montageträger (20) aus einem einzigen Stück durch Ausschneiden und Knicken einer Metallplatte realisiert wird und wenigsten zwei untere, laterale Klauen (26) gegenüber umfasst, die transversal auf jeder Seite des Trägers (20) angeordnet sind und von denen jede geeignet ist, mit einem Teil (18e) zusammenzuwirken, der für die Befestigung des Trägers (20) auf dem Wischerblatt (10) einem Glied (18) des Wischerblattes (10) zugeordnet ist, und einen oberen Teil (28), auf dem das Verbindungsstück (22) geeignet ist, artikuliert um eine transversale Artikulationsachse A montiert zu werden,
wobei der obere Teil (28) wenigstens einen elastisch verformbaren Abschnitt (30) umfasst, der geeignet ist, sich bei der Montage und der Befestigung des Trägers (20) zur Montage auf dem Wischerblatt (10) zu verformen, um eine global transversale Bewegung der lateralen Klauen (26) jeweils zueinander wenigstens zwischen einer beabstandeten Position, in der wenigstens eine Klaue (26) nicht mit dem Teil (18e) des zugeordneten Gliedes (18) zusammenwirkt, um die Montage des Trägers (20) auf dem Wischerblatt (10) zu erlauben, und einer angenäherten Befestigungsposition des Trägers (20), in der jede laterale Klaue (26) mit der Klaue (18e) des zugeordneten Gliedes (18) zusammenwirkt, zu erlauben,
wobei der obere Teil (28) zwei laterale, längliche, vertikale Flügel (34) umfasst, deren unteres Ende (34) jedes Flügels (34) mit einer lateralen Klaue (26) verbunden ist, und die oberen Enden der zwei Flügel (34) mit dem genannten wenigstens einen elastisch verformbaren Abschnitt (30) verbunden sind,
**dadurch gekennzeichnet, dass** der obere Teil (28) einen intermediären Abschnitt (38) umfasst, der transversal zwischen den zwei lateralen Flügeln (34) angeordnet ist, wobei jeder laterale Flügel (34) an den intermediären Abschnitt (38) durch einen zugeordneten, elastisch verformbren Abschnitt (30) angeschlossen ist,
dass der intermediäre Abschnitt (38) einen horizontalen Boden (40) mit länglicher Hauptausrichtung umfasst, der geeignet ist, sich auf eine obere Seite des Wischerblattes (10) aufzustützen, und zwei intermediäre Flügel (42), von denen sich jeder von einem länglichen Rand (40a) mit transversalem Ende des Bodens (40) vertikal nach oben erstreckt,
und dass der obere längliche Boden jedes intermediären Flügels (42) mit dem oberen länglichen Rand eines lateralen Flügels (34) verbunden ist, der durch den zugeordneten elastisch verformbaren Abschnitt zugeordnet ist.

2. Träger (20) gemäß dem vorherigen Anspruch, **dadurch gekennzeichnet, dass** jeder laterale Flügel (34) und der zugeordnete intermediäre Flügel transversal jeweils gegeneinander an ihren vertikalen, länglichen Seiten (34a, 42a) gegenüber zugeordnet sind und dabei eine kleine vertikale Wand (44) bilden, wenn die lateralen Klauen (26) sich in angenäherter Befestigungsposition befinden, und dass, wenn die lateralen Klauen (26) sich in einer beabstandeten Position befinden, der genannte laterale Flügel (34) und der genannte zugeordnete intermediäre Flügel (42) transversal voneinander beabstandet sind.

3. Träger (20) gemäß Anspruch 1 oder 2, **dadurch gekennzeichnet, dass** die zwei lateralen Flügel (34) an ihren länglichen vertikalen Seiten (34a) gegenüber transversal aneinander angefügt sind und eine vertikale Wand (44) bilden, wenn die lateralen Klauen (26) sich in angenäherter Befestigungsposition befinden, und dass, wenn die lateralen Klauen (26) sich in einer beabstandeten Position befinden, die lateralen Flügel (34) transversal voneinander beabstandet sind.

4. Träger (20) gemäß Anspruch 2 oder 3, **dadurch gekennzeichnet, dass** jede kleine Wand (44) Feststellmittel (48, 50) der Flügel (34, 42) in einander angefügter Position umfasst.

5. Träger (20) gemäß dem vorherigen Anspruch, **dadurch gekennzeichnet, dass** die Feststellmittel einen Finger (48) umfassen, der mit einem Flügel (34, 42) fest verbunden ist und der in einer komplementären Aufnahme (50) des zugeordneten Flügels (34, 42) aufgenommen wird.

6. Träger (20) gemäß Anspruch 2 bis 5, **dadurch gekennzeichnet, dass** jede kleine Wand (44) geeignet ist, ohne transversales Spiel in einer komplementären Aufnahme (46) des Verbindungsstücks (22) mit vertikaler, länglicher Hauptausrichtung aufgenommen zu werden, wenn das Verbindungsstück (22) auf dem Artikulationsträger (20) montiert ist.

7. Träger (20) gemäß dem vorherigen Anspruch, **dadurch gekennzeichnet, dass** jeder Flügel (34, 42) des Trägers (20) eine zur transversalen Artikulationsachse A koaxiale Öffnung (52) umfasst, die geeignet ist, eine zugeordnete, interne, transversale Zunge (54) aufzunehmen, die im Verhältnis zu einer internen, vertikalen, länglichen Seite (46i) der zugeordneten Aufnahme (46) hervorsteht, um die Montage und die Artikulation um die transversale Achse A des Verbindungsstücks (22) auf dem Träger (20) zu realisieren.

8. Wischerblatt (10), **dadurch gekennzeichnet, dass** es einen Träger (20) zur Montage gemäß einem der vorherigen Ansprüche umfasst.
